# EUROPÄISCHE PATENTSCHRIFT

(11) **EP 2 404 848 B1**
(45) Veröffentlichungstag und Bekanntmachung des Hinweises auf die Patenterteilung: **20.06.2012**
(21) Anmeldenummer: 11005396.4
(22) Anmeldetag: 01.07.2011
(51) Int. Cl.: B65G 1/04

(54) **Wagen für einen schienengebundenen Transport von Paletten in einem Tiefen-Regalsystem**
Cart for rail-bound transport of palettes within a deep shelf system
Chariot pour le transport relié par rail de palettes dans un système d'étagères profond

(30) Priorität: 07.07.2010 DE 102010026871
(43) Veröffentlichungstag der Anmeldung: 11.01.2012
(73) Patentinhaber: Jungheinrich Aktiengesellschaft, 22047 Hamburg (DE)
(72) Erfinder: Badura, Klaus-Peter, 21357 Barum (DE); Krämer, Beat, 21075 Hamburg (DE); Baumgärtel, Steven, 22083 Hamburg (DE)
(74) Vertreter: Schildberg, Peter

(56) Entgegenhaltungen:
- EP-A1- 1 103 494

## Beschreibung

Die Erfindung betrifft einen Wagen für einen schienengebundenen Transport von Paletten in einem Tiefen-Regalsystem gemäβß dem Oberbegriff des Anspruchs 1. Solche Wagen werden in der Fachsprache auch als UPC (Under Palet Carier) bezeichnet. Es handelt sich hierbei um schienengebundene Kanalfahrwagen für Tiefen-Regalsysteme (Drive-In-Systeme), bei denen mehrere Paletten in der Tiefe des Regals hintereinander gestapelt sind. Der Wagen verfährt die Paletten innerhalb des Tiefen-Regalsystems und nimmt diese durch ein senkrechtes Ausfahren seiner Hubplattform auf.

Aus DE 32 13 983 A1 ist eine Vorrichtung zum Handhaben von Transport- und Lagereinheiten in Hochregal-Blocklagersystemen bekannt. Die Vorrichtung besitzt einen Fahrzeugkörper mit angetriebenen Rädern, über die das Fahrzeug in Schienen verfahren kann. Eine Abrutschsicherung für den Fall, dass das Fahrzeug mit Hilfe eines Gabelstaplers und seiner Lastgabel aufgenommen und aus den Schienen gehoben werden soll, ist nicht vorgesehen.

Aus EP 0 197 448 ist eine Vorrichtung zum Gütertransport in einem Tiefstapelgestell bekannt. Die Vorrichtung weist ein schienengebundenes Fahrzeug auf, das mit seiner von der Last fortweisenden Seite Bügel zum Aufnehmen der Lastgabeln eines Hubstaplers besitzt.

Aus EP 0 310 714 ist ein Lagersystem für Paletten bekannt, bei dem ein schienengebundener Wagen Paletten in dem Regal aufnehmen kann. Der Wagen besitzt an seiner Rückseite ein Gabelbett, mit dem er an den Mast eines Hubwagens ankoppelbar ist.

Aus EP 1 103 494 B1 ist ein Wagen gemäβ dem Oberbegriff des Anspruchs 1 sowie ein Lagersystem für Paletten bekannt, bei dem ein schienengebundener Wagen Paletten innerhalb des Lagerregals verfahren kann. Der Wagen ist durch eine Kupplungsaufnahme an seiner Rückseite mit der Gabel eines Stapelfahrzeugs koppelbar, wobei die Gabel des Stapelfahrzeugs ein entsprechendes Kupplungsgegenteil trägt.

Aus EP 1 554 198 B1 ist ein Schienensystem für eine Tiefen-Regallagerung bekannt, bei dem ein Wagen die Last aufnimmt. Eine Abrutschsicherung für den Wagen ist nicht vorgesehen. Ebenso weisen die bekannten Wagen aus EP 1 772 399 B 1 und WO 2004/039701 A1 keine Abrutschsicherung auf.

Aus EP 2 008 950 A1 ist ein schienengebundener Wagen zum Transport von Lasten in einem Tiefen-Regalsystem bekannt. Eine Abrutschsicherung für den Transport des Wagens auf der Gabel eines Gabelstaplers ist nicht vorgesehen.

Aus DE 20 2007 003 447 U 1 ist ein Kleinteilelager mit einem Regalbediengerät bekannt. Das Regalbediengerät ist mittels zweier Raupenantriebe verfahrbar und verfügt über einen Riemenantrieb zum Transport von Lagergut.

Tiefen-Regalsysteme, die mit Hilfe von schienengebundenen Wagen Paletten und sonstige Lasten innerhalb des Lagersystems bewegen, besitzen in der Regel mehr Kanäle als Wagen, so dass die Notwendigkeit besteht, Wagen mit oder ohne aufgenommene Palette aus einem Kanal mit Hilfe eines Gabelstaplers zu entnehmen und in einem anderen Kanal einzusetzen. Es besteht daher die Notwendigkeit, den auf die Lastgabel eines Fahrzeugs aufgenommenen Wagen gegen ein seitliches Abrutschen abzusichern. Gleichzeitig besteht aber auch die Notwendigkeit, das Fahrzeug möglichst flach zu bauen, um nicht zu viel an Platz in dem Tiefen-Regalsystem für die darin fahrenden Wagen vorzusehen.

Der Erfindung liegt die Aufgabe zugrunde, einen Wagen zum Transport von Paletten und anderen Lasten innerhalb eines Tiefen-Regalsystems bereitzustellen, der sicher von den Gabelzinken eines Flurförderzeuges aufgenommen werden kann, aber zugleich flach baut.

Erfindungsgemäß wird die Aufgabe durch einen Wagen mit den Merkmalen aus Anspruch 1 gelöst. Vorteilhafte Ausgestaltungen bilden den Gegenstand der Unteransprüche.

Der erfindungsgemäße Wagen dient für einen schienengebundenen Transport von Paletten oder anderen Lasten in einem Tiefen-Regalsystem. Der Wagen besitzt eine Hubplattform, durch deren Anheben die Palette bzw. die Last aufgenommen wird. Ferner besitzt der Wagen einen Fahrzeugkörper mit mindestens vier Rädern, von denen mindestens ein Paar zum Verfahren des Wagens auf den Schienen antreibbar ist. Erfindungsgemäß besitzt der Wagen an gegenüberliegenden Längsseiten jeweils eine Abrutschsicherung. Die Längsseiten des Wagens erstrecken sich im Wesentlichen parallel zu den Schienen des Tiefen-Regalsystems, wenn der Wagen in dieses eingesetzt ist. Die Abrutschsicherung dient dazu, bei einem Aufnehmen des Wagens mittels einer herkömmlichen Lastgabel eines Flurförderzeugs sicherzustellen, dass der Wagen nicht von der Lastgabel abrutschen kann. Die Abrutschsicherung besitzt auf jeder Längsseite des Wagens einen schwenkbar an dem Fahrzeugkörper gelagerten Hebel, dessen freies Ende eine drehbar gelagerte Rolle aufweist. Der schwenkbar an dem Fahrzeugkörper gelagerte Hebel steht in seiner sichernden Position über eine von der Hubplattform abgewandte Unterseite des Fahrzeugkörpers hinaus. In seiner Betriebsposition ist der Hebel derart verschwenkt, dass er mit seiner Rolle auf den Schienen abrollt. Die erfindungsgemäß vorgesehene Abrutschsicherung auf jeder Seite des Fahrzeugkörpers besitzt jeweils einen nach unten klappbaren Hebel, der seitlich über die Unterseite des Fahrzeugkörpers vorsteht und so ein Verrutschen des Wagens auf einer Lastgabel verhindert. Im Betrieb des Wagens, in dem der Wagen in den Schienen des Tiefen-Regalsystems verfährt, ist der Hebel in seine Betriebsposition geschwenkt, in der die endseitig angeordnete Rolle des Hebels auf den Schienen abrollt. Der besondere Vorteil der erfindungsgemäß vorgesehenen Abrutschsicherung besteht darin, dass die Abrutschsicherung dann ausklappt, wenn der Wagen nicht auf den Schienen verfährt.

In einer bevorzugten Weiterbildung des erfindungsgemäßen Wagens besitzt jede Abrutschsicherung zwei Hebel, die derart an dem Fahrzeugkörper angeordnet sind, dass sie in entgegengesetzter Richtung in die sichernde Position verschenken. Bezogen auf eine mögliche Fahrtrichtung des Wagens bedeutet dies, dass einer der Hebel in Fahrtrichtung verschwenkt wird, während der zweite Hebel entgegen der Fahrtrichtung verschwenkt wird.

In einer weiteren bevorzugten Ausgestaltung ist die Rolle auf der vom Fahrzeugkörper fortweisenden Seite des Hebels angeordnet. Damit die endseitig an dem Hebel angeordnete Rolle in der Betriebsposition des Hebels ganz oder teilweise auf den Schienen abrollen kann, ist die Rolle in einer Spur mit den Rädern am Fahrzeugkörper angeordnet.

In einer bevorzugten Weiterbildung des erfindungsgemäßen Verfahrens ist die Abrutschsicherung zusätzlich mit einer Einsetzhilfe ausgestattet. Die Einsetzhilfe besitzt ein schräg zum Fahrzeugkörper verlaufendes Leitblech, das an seiner zur Hubplattform weisenden Seite seitlich einen größeren Abstand vom Fahrzeugkörper besitzt als von der Unterseite des Fahrzeugkörpers. Beim Einsetzen des Wagens in die Schienen des Tiefen-Regalsystems sorgen die Einsetzhilfen dafür, dass das Fahrzeug leichter in seine vorgesehene Position auf den Schienen einnimmt.

Um den Winkelbereich, in dem der Hebel mit der Abrutschsicherung verschwenkt werden kann, zu begrenzen, ist der Hebel an einer Platte gelagert, die einen Anschlag aufweist. Bevorzugt liegt der Hebel in seiner sichernden Position an diesem Anschlag an.

In einer weiteren bevorzugten Ausgestaltung besitzt die Abrutschsicherung zusätzlich zwei seitlich vorstehende Rollen, die senkrecht zu den auf den Schienen laufenden Rädern angeordnet sind. Die seitlich vorstehenden Rollen können an seitlichen Begrenzungsflächen der Schienen abrollen und stellen so sicher, dass der Wagen in den Schienen zuverlässig geführt ist.

Die Erfindung wird nachfolgend anhand von Figuren näher beschrieben.

Es zeigt:
- Fig. 1: einen Wagen für den schienengebundenen Transport von Paletten in einem Tiefen-Regalsystem, angehoben von einer Lastgabel in einer perspektivischen Ansicht von der Seite,
- Fig. 2: eine perspektivische Ansicht des Wagens aus Fig. 1 mit heraus geklappter Abrutschsicherung in einer perspektivischen Ansicht von unten,
- Fig. 3: den auf den Schienen eingesetzten Wagen in einer perspektivischen Ansicht von außen mit einer Aussparung in der seitlichen Begrenzungsschiene,
- Fig. 4: eine Sicht auf den Hebel mit seiner zugehörigen Platte von oben,
- Fig. 5: eine Sicht auf den Hebel mit seiner zugehörigen Befestigungsplatte von der Seite und
- Fig. 6: der Wagen aus Fig. 1 in einer perspektivischen Gesamtansicht.

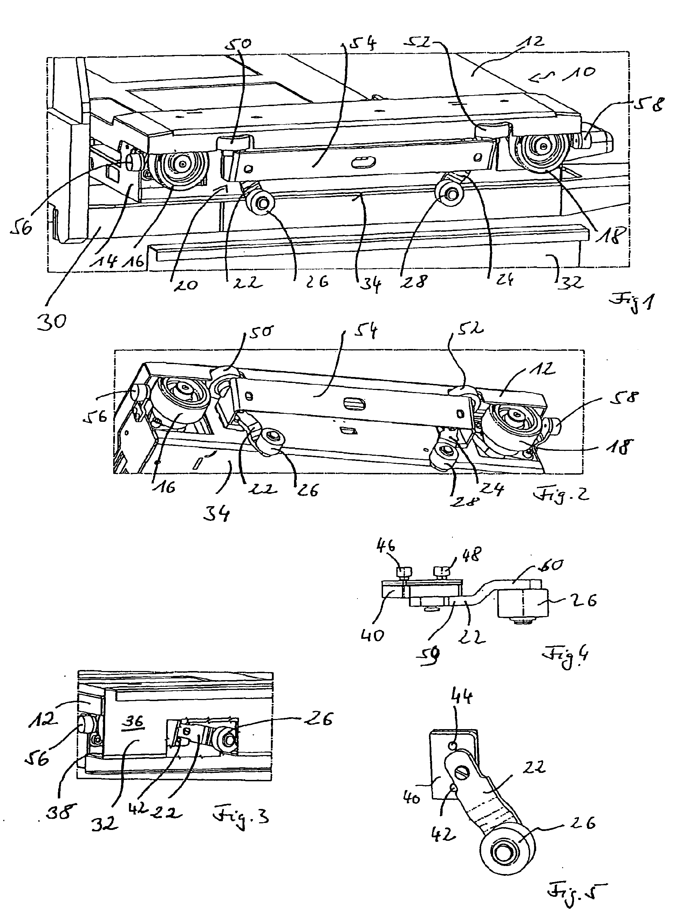

Fig. 1 zeigt einen als UPC bezeichneten schienengebundenen Wagen 10 mit einer Hubplattform 12 und einem Fahrzeugkörper 14. Der Wagen besitzt an seiner Seite zwei Räder 16, 18, von denen mindestens eines angetrieben ist. Im Betrieb besitzt der Wagen Sensoren, mit denen detektiert wird, ob sich der Wagen unterhalb einer Palette befindet. Ist der Wagen korrekt zu der Palette ausgerichtet, kann diese durch Anheben der Hubplattform 12 aufgenommen werden und so innerhalb der Schienen verfahren werden.

An der mit den Rändern 16 und 18 ausgestatteten Seite besitzt der Fahrzeugkörper eine Abrutschsicherung 20, die zwei schwenkbare Hebel 22 und 24 aufweist. Jeder der Hebel 22, 24 besitzt an seinem Ende eine Rolle 26 oder 28. Die Rollen 26, 28 sind jeweils auf der vom Fahrzeugkörper fortweisenden Seite der Hebel 22 bzw. 24 angeordnet.

Fign. 1 und 2 zeigen die Situation, in der der Wagen 10 mit Hilfe einer Lastgabel 30 aus den Schienen 32 gehoben ist. In dieser Situation stehen die Hebel 22 und 24 seitlich über die Unterseite 34 des Fahrzeugkörpers vor. Ein seitliches Verschieben des Wagens 10 auf der Lastgabel 30 ist daher nicht möglich, so dass der Wagen durch die Hebel 22 und 24 gegen ein Abrutschen gesichert ist.

Fig. 3 zeigt das in die Schienen eingesetzte Fahrzeug 10. Die Schienen besitzen eine Seitenwand 36 und eine Lauffläche 38, die in einem rechten Winkel zur Seitenwand 36 steht. In seiner Betriebsposition ist der Hebel 22 in Richtung zur Hubplattform 12 verschwenkt und rollt mit seiner Rolle 26 auf der Lauffläche 38 der Schiene ab.

Fig. 4 zeigt den Hebel der Abrutschsicherung in einer Ansicht von oben. Der Hebel 22 besitzt einen ersten Hebelabschnitt 59, der über eine Bolzenverbindung schwenkbar an einer Befestigungsplatte 40 befestigt ist. Ein zweiter Hebelabschnitt 60 ist parallel hin zum Fahrzeugkörper gegenüber dem ersten Hebelabschnitt 59 versetzt. An dem zweiten Hebelabschnitt 60 ist die Rolle montiert. Die Befestigungsplatte 40 wird über zwei Bolzen 48 und 46 an dem Fahrzeugkörper befestigt. Wie aus der Seitenansicht in Fig. 5 zu erkennen ist, besitzt die Befestigungsplatte 40 zwei Anschläge 44 und 42, an denen der Hebel 22 in seiner sichernden Position (Fign. 1, 2) anliegt. Die Anlagefläche des Hebels 22 an dem Anschlag 42 ist abgerundet, so dass der Hebel 22 flächig an dem im Wesentlichen kreisförmigen Anschlag 42 anliegt. Zur einfachen Montage des Hebels ist auch ein Anschlag 44 vorgesehen, der allerdings im Betrieb nicht verwendet wird. Durch den zweiten Anschlag 44 ist es unerheblich, in welcher Orientierung die Befestigungsplatte 40 an dem Fahrzeugkörper befestigt wird.

An dem Fahrzeugkörper 14 sind zusätzliche Rollen 50 und 52 vorgesehen, die in Verfahrrichtung des Fahrzeugs abrollen. Im eingesetzten Zustand des Wagens liegen die Rollen 50 und 52 an der hoch ausgebildeten Seitenwand 36 an und stellen somit sicher, dass der Wagen in der Spur auf den Schienen bleibt.

Das Einsetzen des Wagens in die Schienen, insbesondere das Einführen des Wagens zwischen die hoch stehenden Seitenwände 36, wird durch ein schräges Leitblech 54 erleichtert. Falls das Fahrzeug sich nicht genau oberhalb der Ablauffläche 38 der Schienen 32 befindet, hilft das schräg orientierte Leitblech 54 beim Einführen des Fahrzeugs.

Das Fahrzeug besitzt in seiner Fahrtrichtung jeweils elastische Stoßfänger 56 und 58, die Erschütterungen durch Auffahren auf ein Hindernis vermeiden sollen.

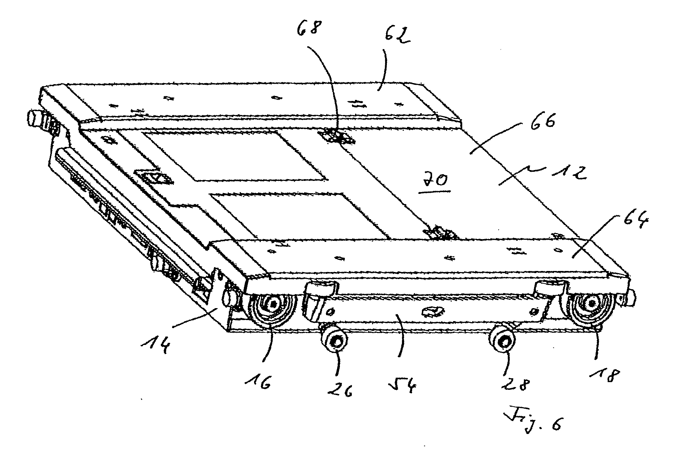

Fig. 6 zeigt den Wagen aus Fig. 1 in einer perspektivischen Gesamtansicht. Deutlich zu erkennen ist die Hubplattform 12, die auf der Oberseite des Fahrzeugkörpers 14 angeordnet ist. Die Hubplattform 12 besitzt zwei Außenbereiche 62 und 64, die sich über die Länge des Fahrzeugs erstrecken. Der zentrale Bereich 66 der Hubplattform 12 ist gegenüber den Außenbereichen 62 und 64 abgesenkt. Im zentralen Bereich 66 der Hubplattform ist ein über Scharniere 68 angelenkter Deckel 70 angebracht, der geöffnet werden kann, um in das Innere des Fahrzeugs zu gelangen. In Fig. 6 sind ebenfalls die Räder 16 und 18 zu erkennen, die schienengebunden in dem Regal verfahren. Die Rollen 26 und 28 sind in Fig. 6 in die sichernde Position des Wagen ausgeklappt.

## Patentansprüche

1. Wagen (10) für einen schienengebundenen Transport von Paletten und anderen Lasten in einem Tiefen-Regalsystem, wobei der Wagen eine Hubplattform (12) und einen Fahrzeugkörper (14) mit mindestens vier Rädern (16,18) aufweist, von denen mindestens ein Paar zum Verfahren des Wagens auf den Schienen (32) antreibbar ist, **dadurch gekennzeichnet, dass** an gegenüberliegenden Längsseiten des Wagen (10) jeweils eine Abrutschsicherung vorgesehen ist, die einen schwenkbar an dem Fahrzeugkörper (14) gelagerten Hebel (22, 24) mit einer drehbar gelagerten Rolle (26, 28) an dessen freiem Ende aufweist, wobei der Hebel (22, 24) in seiner sichernden Position über eine von der Hubplattform (12) abgewandte Unterseite (34) des Fahrzeugkörpers (14) hinaus steht und in seiner verschwenkten Betriebsposition mit seiner Rolle (26,28) auf der Schiene (38) abrollt.

2. Wagen nach Anspruch 1, **dadurch gekennzeichnet, dass** jede Abrutschsicherung zwei Hebel (22, 24) aufweist, die derart an dem Fahrzeugkörper (14) angeordnet sind, dass sie in entgegengesetzter Richtung in die sichernde Position verschwenken.

3. Wagen nach Anspruch 1 oder 2, **dadurch gekennzeichnet, dass** die Rolle (26, 28) auf der vom Fahrzeugkörper fortweisenden Seite des Hebels (22, 24) angeordnet ist.

4. Wagen nach einem der Ansprüche 1 bis 3, **dadurch gekennzeichnet, dass** die Abrutschsicherung jeweils eine Einsetzhilfe (54) aufweist, die ein schräg zum Fahrzeugkörper verlaufendes Leitblech (54) aufweist, das an seinem zur Hubplattform (12) weisenden Ende seitlich einen größeren Abstand vom Fahrzeugkörper (14) besitzt als an seinem zur Unterseite (34) des Fahrzeugkörpers (14) weisenden Ende.

5. Wagen nach einem der Ansprüche 1 bis 4, **dadurch gekennzeichnet, dass** der Hebel (22, 24) schwenkbar an einer Platte (40) gelagert ist, die einen Anschlag (42, 44) aufweist, der die Bewegung des Hebels (22) in seine Betriebsposition begrenzt.

6. Wagen nach einem der Ansprüche 1 bis 5, **dadurch gekennzeichnet, dass** die Abrutschsicherung seitlich zwei vorstehende Rollen (50, 52) besitzt, die senkrecht zu den auf den Schienen laufenden Rädern (16, 18) angeordnet sind.

## Claims

1. Cart (10) for rail-bound transport of palettes and other loads within a deep shelf system, wherein the cart has a lifting platform (12) and a vehicle body (14) with at least four wheels (16, 18), from which at least one pair can be driven to move the cart on the rails (32), **characterised in that** one anti slide-off device at a time is provided on opposing long sides of the cart (10), the anti slide-off device having a lever (22, 24) pivotally mounted on the vehicle body (14) and having a rotatably mounted roller (26, 28) at its free end, wherein the lever (22, 24) projects beyond a downside (34) of the vehicle body (14) facing away from the lifting platform (12) in its securing position, and rolls on the rail (38) with its roller (26, 28) in its pivoted operating position.

2. Cart according to claim 1, **characterised in that** each anti slide-off device has two levers (22, 24), which are arranged on the vehicle body (14) such that they pivot into the securing position in opposite directions.

3. Cart according to claim 1 or 2, **characterised in that** the roller (26, 28) is arranged on that side of the lever (22, 24) which points away from the vehicle body.

4. Cart according to any one of claims 1 to 3, **characterised in that** each anti slide-off device has an insertion aid (54), which has a guide plate (54) running obliquely to the vehicle body and having a greater lateral distance from the vehicle body (14) at its end pointing to the lifting platform (12) than at its end pointing to the downside (34) of the vehicle body (14).

5. Cart according to any one of claims 1 to 4, **characterised in that** the lever (22, 24) is pivotally mounted on a board (40) which has an abutment (42, 44) that limits the movement of the lever (22) into its operating position.

6. Cart according to any one of claims 1 to 5, **characterised in that** the anti slide-off device has two projecting rollers (50, 52) on its sides, which are arranged vertically to the wheels (16, 18) that run on the rails (16, 18).

## Revendications

1. Chariot (10) pour le transport relié par rail de palettes et autres charges dans un système d'étagères profondes, le chariot ayant une plate-forme de levage (12) et un corps de véhicule (14) avec au moins quatre roues (16, 18), dont au moins une paire peut être entraînée pour avancer le chariot sur les rails (32), **caractérisé en ce que** un dispositif anti-glissement est pourvu sur chacun des grands côtés opposés du chariot (10), le dispositif anti-glissement ayant un levier (22, 24) monté de façon pivotante sur le corps de véhicule (14) et ayant un rouleau (26, 28) monté de façon rotative sur l'extrémité libre du levier, le levier (22, 24) faisant saillie au-delà d'un côté inférieur (34) du corps de véhicule (14) détourné de la plate-forme de levage (12) dans sa position de sécurisation, et roulant avec son rouleau (26, 28) sur le rail (38) dans sa position de service pivotée.

2. Chariot selon la revendication 1, **caractérisé en ce que** chaque dispositif anti-glissement a deux leviers (22, 24), qui sont disposés sur le corps de véhicule (14) de telle façon qu'ils pivotent à la position sécurisante dans des directions opposées.

3. Chariot selon la revendication 1 ou 2, **caractérisé en ce que** le rouleau (26, 28) est disposé dans ce côté du levier (22, 24) qui montre vers le dehors du corps de véhicule.

4. Chariot selon l'une quelconque des revendications 1 à 3, **caractérisé en ce que** chaque dispositif anti-glissement a un dispositif d'assistance d'insertion (54), qui présente un déflecteur (54) s'étendant de façon oblique au corps de véhicule et ayant latéralement, dans son extrémité qui montre vers la plate-forme de levage (12), une distance plus grande du corps de véhicule (14) que dans son extrémité qui montre au côté inférieur (34) du corps de véhicule (14).

5. Chariot selon l'une quelconque des revendications 1 à 4, **caractérisé en ce que** le levier (22, 24) est monté de façon pivotante sur une dalle (40) qui a une butée (42, 44) qui limite le mouvement du levier (22) vers sa position de service.

6. Chariot selon l'une quelconque des revendications 1 à 5, **caractérisé en ce que** le dispositif anti-glissement a sur ses côtés deux rouleaux faisant saillie (50, 52) qui sont disposés verticalement aux roues (16, 18) qui marchent sur les rails (16, 18).
